# EUROPÄISCHE PATENTANMELDUNG

(11) **EP 4 838 724 A1**
(43) Veröffentlichungstag der Anmeldung: **11.11.2026**
(21) Anmeldenummer: 25174231.8
(22) Anmeldetag: 05.05.2025
(51) Int. Cl.: H02G 3/06, H02G 3/22, H02G 15/007, G01D 11/24, H02G 15/00

(54) **VORRICHTUNG ZUR DURCHFÜHRUNG VON LITZEN UND WINKELMESSEINRICHTUNG MIT ENTSPRECHENDER VORRICHTUNG**

(71) Anmelder: Dr. Johannes Heidenhain GmbH, 83301 Traunreut (DE)
(72) Erfinder: ECKL, Tobias, 83052 Bruckmühl (DE); KARGUS, Waldemar, 83646 Bad Tölz (DE)
(74) Vertreter: Hofmann, Ernst

(57) **Zusammenfassung**

Die Erfindung betrifft eine Vorrichtung (1), umfassend mindestens ein einstückiges Grundkörperelement (4, 5, 6) zum Durchführen von Litzen (3) durch einen Ausschnitt (17) einer Gehäusewand (2) einer Positionsmesseinrichtung. Das Grundkörperelement 4, 5, 6) umfasst mindestens einen Durchtrittsbereich (7, 8) zum Hindurchführen einer Litze (3) aus dem Gehäuseinneren (I) zur Außenseite (O) der Gehäusewand (2). Der Durchtrittsbereich (7, 8) ist als gekrümmte Nut auf einer Grundfläche (G) des Grundkörperelements (4, 5, 6) ausgebildet. Das Grundkörperelement (4, 5, 6) umfasst einen ersten Abgangsabschnitt (9) und einen zweiten Abgangsabschnitt (10) sowie einen dazwischen angeordneten Übergangsabschnitt (11). Das Grundkörperelement (4, 5, 6) ragt mit dem Übergangsabschnitt (11) formschlüssig durch den Ausschnitt (17) der Gehäusewand (2). Durch ein Einfügen einer Litze (3) in den Durchtrittsbereich (7, 8) expandiert zumindest die Außenabmessung des Grundkörperelements (4, 5, 6) im Übergangsabschnitt (11), wodurch das Grundkörperelement (4, 5, 6) an die Gehäusewand fixierbar ist.

## Beschreibung

### GEBIET DER TECHNIK

Positionsmesseinrichtungen, insbesondere Resolver, besitzen ein Gehäuse, das die einzelnen Komponenten beherbergt. Im Inneren des Gehäuses befindet sich in der Regel funktionsspezifische Anschlusselemente, welche mithilfe von Litzen mit Energie und Signalen versorgt werden. Die Litzen sind durch Steck- oder Lötverbindungen mit den funktionsspezifischen Anschlusselementen verbunden und werden durch die Gehäusewand nach außen geführt, um bei der Endmontage an eine Folgeelektronik angeschlossen zu werden. Eine solche Positionsmesseinrichtung in Form eines Resolvers kann beispielsweise in einen Servoantrieb integriert sein. Beim Betrieb des Servoantriebes können die Litzen des Resolvers radialen Zugbelastungen ausgesetzt sein, so dass zusätzlich eine Zugentlastung der Litzen zum Schutz der Steck-oder Lötverbindungen erforderlich ist.

Derartige Positionsmesseinrichtungen werden meist in großen Stückzahlen hergestellt, so dass eine einfache Fertigung in modularer Bauweise geboten ist.

### STAND DER TECHNIK

Aus dem Gebrauchsmuster DE 20 2010 000 903 U1 ist eine Vorrichtung zur Gehäusewand-Durchführung von Litzen bekannt, bei der während der Montage der Vorrichtung ein Grundkörper mit einem Klemmkörper in den Ausschnitt einer Gehäusewand verrastet wird, wobei gleichzeitig mehrere Litzen in einem zwischen Grund- und Klemmkörper angeordneten Durchtrittsbereich eingeklemmt werden.

Nachteilig an der aus dem Stand der Technik vorbekannten Vorrichtung ist unter anderem, dass es bei einer starken Zugbelastung der Litzen dazu kommen kann, dass sich die Verrastung der Vorrichtung löst oder die Litzen beschädigt werden.

### ZUSAMMENFASSUNG DER ERFINDUNG

Der Erfindung liegt die Aufgabe zugrunde eine Vorrichtung zur Gehäusewand-Durchführung von Litzen zu schaffen, welche robust ausgebildet ist und gleichzeitig eine einfache Montage bei modular gefertigten Positionsmesseinrichtungen ermöglicht.

Diese Aufgabe wird erfindungsgemäß durch eine Vorrichtung mit den Merkmalen des Anspruchs 1 und durch eine Winkelmesseinrichtung mit den Merkmalen des Anspruchs 12 gelöst. Vorteilhafte Ausgestaltungen und Weiterbildungen sind in den jeweils abhängigen Ansprüchen angegeben.

Die erfindungsgemäße Vorrichtung umfasst mindestens ein einstückiges Grundkörperelement zum Durchführen von Litzen durch einen Ausschnitt einer Gehäusewand einer Positionsmesseinrichtung. Das Grundkörperelement umfasst mindestens einen Durchtrittsbereich zum Hindurchführen einer Litze mit definiertem Außendurchmesser aus dem Gehäuseinneren zur Außenseite der Gehäusewand. Der Durchtrittsbereich ist als einfach oder mehrfach gekrümmte Nut auf einer Grundfläche des Grundkörperelements ausgebildet. Das Grundkörperelement umfasst einen ersten Abgangsabschnitt und einen zweiten Abgangsabschnitt sowie einen dazwischen angeordneten Übergangsabschnitt. Das Grundkörperelement ragt mit dem Übergangsabschnitt formschlüssig durch den Ausschnitt der Gehäusewand. Durch ein Einfügen einer Litze mit definiertem Außendurchmesser in den Durchtrittsbereich expandiert zumindest die Außenabmessung des Grundkörperelements im Übergangsabschnitt, wodurch das Grundkörperelement kraftschlüssig an die Gehäusewand fixierbar ist.

Die Expansion des Grundkörperelements im Bereich des Übergangsabschnitts, insbesondere dort wo das Grundkörperelement durch die Gehäusewand hindurchtritt, basiert auf einer weitestgehend elastischen Verformung des Grundkörperelements, nachdem eine geeignete Litze mit definiertem Außendurchmesser in den Durchtrittsbereich eingefügt wurde.

Vorteilhafterweise kann vorgesehen sein, dass der Durchtrittsbereich, insbesondere bei eingesetztem Grundkörperelement in den Ausschnitt der Gehäusewand, einen geringfügig kleineren Durchmesser als den Durchmesser der unbeanspruchten Litze aufweist.

Mit Vorteil ist der Übergangsabschnitt des Grundkörperelements verjüngt ausgebildet, so dass der erste Abgangsabschnitt und der zweite Abgangsabschnitt bei eingesetztem Grundkörperelement die Gehäusewand umgreifen.

Gemäß einer Ausführungsform ist der Durchtrittsbereich im Bereich des zweiten Abgangsabschnitts geweitet ausgebildet.

Mit Vorteil ist der Durchtrittsbereich innerhalb des zweiten Abgangsabschnitts derart geweitet, dass ein aus dem Grundkörperelement austretender lateraler Teil einer Litze bedarfsgerecht in einem Winkelbereich von 10 bis 180 Grad frei positionierbar ist.

Bevorzugt ist eine Auslenkung der Litze im Winkelbereich von 10 bis 180 Grad, und insbesondere in einem Winkelbereich von 90 Grad, innerhalb einer zur Grundfläche parallel verlaufenden Ebene ermöglicht.

In weiterer Ausgestaltung verläuft der Durchtrittsbereich innerhalb des ersten Abgangsabschnitts teilweise entlang einer Umfangsrichtung der Gehäusewand, mit einer ersten Austrittsöffnung, welche senkrecht zum Ausschnitt der Gehäusewand verläuft.

Gemäß einer vorteilhaften Weiterbildung weist das Grundkörperelement im Bereich des ersten Abgangsabschnitts eine Einbuchtung oder Ausbuchtung auf, welche an eine Ausbuchtung bzw. Einbuchtung der Gehäusewand anliegt.

Ist am Grundkörperelement eine Einbuchtung ausgebildet, kann diese derart ausgestaltet sein, dass diese sich teilweise in den Durchtrittsbereich erstreckt, so dass das Grundkörperelement neben einer ersten Austrittsöffnung zusätzlich eine zweite Austrittsöffnung aufweist. Bevorzugt verläuft diese zweite Austrittsöffnung parallel zum Ausschnitt der Gehäusewand.

Mit Vorteil ist das Grundkörperelement symmetrisch zu einer Symmetrieachse ausgebildet, welche senkrecht zum Ausschnitt der Gehäusewand verläuft.

In weiterer Ausgestaltung ist das Grundkörperelement aus einem Thermoplast, Duroplast oder Elastomer, vorzugsweise als Spritzgussteil oder alternativ als Additivteil hergestellt.

Vorzugsweise handelt es sich bei dem Thermoplast, Duroplast oder Elastomer um einen faserverstärkten Kunststoff, beispielsweise um ein Polyamid mit einem Glasfaseranteil von 25 %.

Gemäß einer vorteilhaften Weiterbildung der Erfindung umfasst die Vorrichtung zwei oder mehr Grundkörperelemente, welche gestapelt im Ausschnitt der Gehäusewand angeordnet sind.

In weiterer Ausgestaltung sind die gestapelten Grundkörperelemente identisch ausgebildet, wobei die Grundflächen, umfassend die Durchtrittsbereiche der außen liegenden Grundkörperelemente, in Richtung der Stapelmitte weisen.

Im Rahmen der Erfindung kann wenigstens eine erfindungsgemäße Vorrichtung zur Durchführung von Litzen bei einer Winkelmesseinrichtung, insbesondere einem Resolver, umfasst sein.

Gemäß einer vorteilhaften Weiterbildung umfasst die Gehäusewand der Winkelmesseinrichtung mindestens eine erste und zweite Gehäusewandkomponente, welche in einer axialen Richtung bezüglich einer gemeinsamen Achse zusammenfügbar sind. Die Gehäusewandkomponenten weisen jeweils einen Teilausschnitt auf, welche gemeinsamen den Ausschnitt ausbilden, wobei der Ausschnitt die Vorrichtung zur Durchführung von Litzen aufweist und wobei jede Gehäusewandkomponente im jeweiligen Teilausschnitt mindestens ein Grundkörperelement umfasst.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert.

### KURZE BESCHREIBUNG DER ZEICHNUNGEN

### Es zeigt

- Fig. 1: einen Resolver mit einer Vorrichtung zur Durchführung von Litzen;
- Fig. 2: eine erste perspektivische Ansicht eines Grundkörperelements;
- Fig. 3: eine zweite perspektivische Ansicht des Grundkörperelements aus Fig. 2;
- Fig. 4: eine Draufsicht auf eine Gehäusewandkomponente des Resolvergehäuses mit eingesetztem Grundkörperelement;
- Fig. 5: eine Seitenansicht der Vorrichtung mit einer eingesetzten Litze;
- Fig. 6: eine perspektivische Detailansicht eines Resolvers mit einer Vorrichtung zur Durchführung von mehreren Litzen mit drei Grundkörperelementen.

### BESCHREIBUNG DER AUSFÜHRUNGSFORMEN

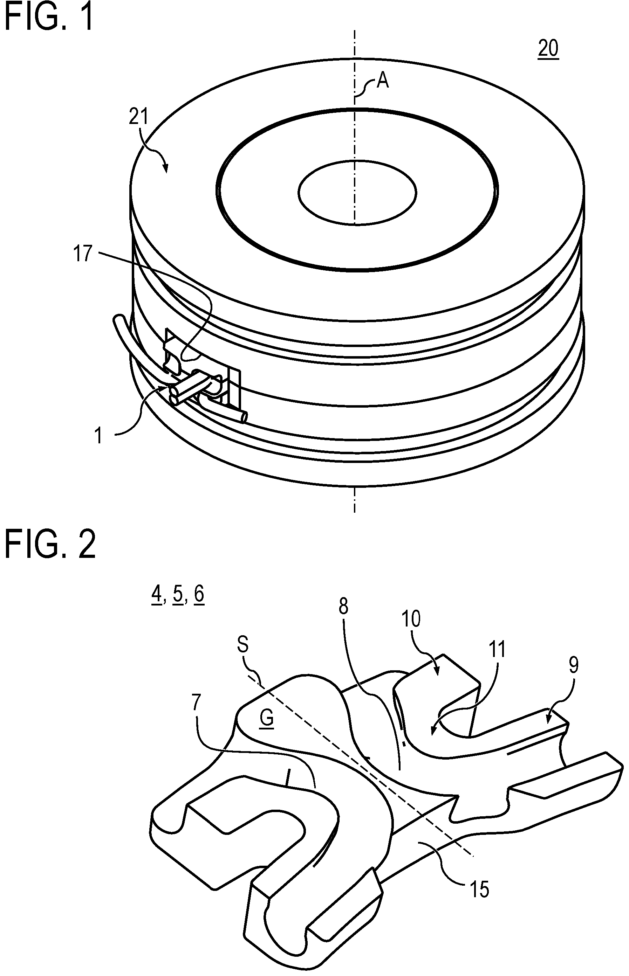

Fig. 1 zeigt eine modular aufgebaute Winkelmesseinrichtung in Form eines Resolvers 20, welcher eine Vorrichtung 1 aufweist, welche bestimmt ist, mehrere Litzen 3 definiert vom Gehäuseinneren I durch die Gehäusewand 2 zur Außenseite O des Resolvergehäuses 21 zu führen. Hierzu weist die Gehäusewand 2 einen Ausschnitt 17 auf, welcher im dargestellten Ausführungsbeispiel im Wesentlichen rechteckig ausgebildet ist. Die Litzen 3 dienen dazu, im Gehäuseinneren I funktionsspezifische Anschlusselemente an eine außerhalb des Resolvers 20 angeordnete Folgeelektronik anzuschließen.

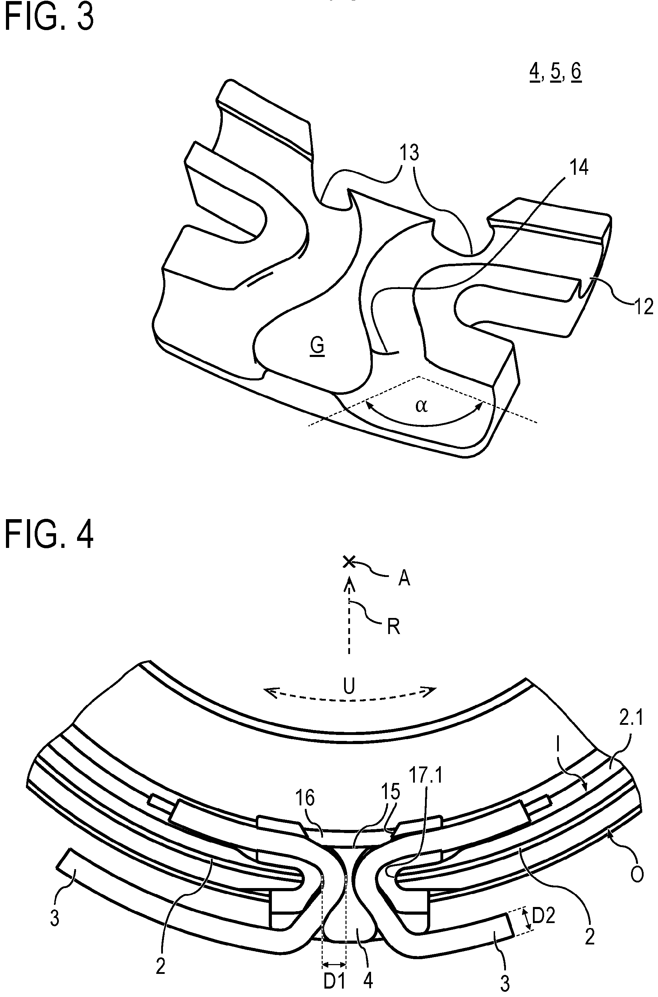

Zum definierten Führen der einzelnen Litzen 3 vom Gehäuseinneren I zur Außenseite O umfasst die Vorrichtung 1 wenigstens ein Grundkörperelement 4, 5, 6, welches in den Figs. 3 und 4 gezeigt ist.

Das zu einer Symmetrielinie S symmetrisch aufgebaute Grundkörperelement 4, 5, 6 weist im dargestellten Ausführungsbeispiel einen ersten Abgangsabschnitt 9 und einen zweiten Abgangsabschnitt 10 sowie einen zwischen ersten und zweiten Abgangsabschnitt 9, 10 angeordneten Übergangsabschnitt 11. Der Übergangsabschnitt 11 ist verglichen mit den beiden Abgangsabschnitten 9, 10 verjüngt ausgebildet, so dass das in den Ausschnitt 17 eingesetzte Grundkörperelement 4, 5, 6 mit den beiden Abgangsabschnitten 9, 10 die Gehäusewand 2 formschlüssig umgreift.

Das Grundkörperelement 4, 5, 6 umfasst wenigstens zwei Durchführungsbereiche 7, 8, welche als Nut auf einer Grundfläche G des Grundkörperelements 4, 5, 6 ausgebildet sind. Jeder der Durchführungsbereiche 7, 8 erstreckt sich kontinuierlich vom ersten Abgangsabschnitt 9 über den Übergangsabschnitt 11 hin zum zweiten Abgangsabschnitt 10. Die Durchführungsbereiche 7, 8 sind bevorzugt einfach oder mehrfachgekrümmt ausgebildet, wodurch eine für die später darin verlaufende Litze 3 schonende Zugentlastung gewährleistet ist.

Im zweiten Abgangsabschnitt 10 sind die Durchführungsbereiche 7, 8 ab einer dritten Austrittsöffnung 14 jeweils geweitet ausgebildet, so dass eine Litze 3 in diesem Abschnitt des Grundkörpers 4, 5, 6 in einem Winkelbereich α zwischen 10 und 180 Grand und insbesondere in einem Winkelbereich von 90 Grad bedarfsgerecht ausgelenkt werden kann, ohne dabei einen vordefinierten minimalen Krümmungsradius der Litze zu unterschreiten. Durch eine solche näherungsweise trichterartig auslaufende Ausgestaltung der Durchführungsbereiche 7, 8 wird erreicht, dass die Litzen 3 im Bereich des zweiten Abgangsabschnitts 10 je nach Anforderung frei positioniert werden können.

Im ersten Abgangsabschnitt 9 verlaufen die Durchführungsbereiche 7, 8 wenigstens teilweise entlang der Umfangsrichtung U der Gehäusewand 2, wobei die Durchführungsbereiche 7, 8 in einer ersten Austrittsöffnung 12 münden. Die erste Austrittsöffnung 12 ist gemäß dem in den Figs. 2 und 3 dargestellten Ausführungsbeispiel nicht geweitet ausgebildet, d. h. der Durchmesser der ersten Austrittsöffnung 12 entspricht annähernd dem Durchmesser D1 der Durchführungsbereiche 7, 8. Gemäß eines nicht dargestellten weiteren Ausführungsbeispiels ist es jedoch möglich, den ersten Abgangsabschnitt 9 analog zum zweiten Abgangsabschnitt 10 auszubilden, so dass dieser ebenfalls geweitet ausgebildet ist.

Der erste Abgangsabschnitt 9 kann, wie in Fig. 2 und 3 gezeigt, eine zur Symmetrielinie S zentrierte Einbuchtung 15 aufweisen, welche die Durchführungsbereiche 7, 8 teilweise schneidet, so dass die Durchführungsbereiche 7, 8 im ersten Abgangsabschnitt 9 jeweils eine zweite Austrittsöffnung 13 aufweisen können. Diese dient zur Fixierung der eingelegten Litze und unterstützt die Zugentlastung derselben in beide Richtungen.

Fig. 4 zeigt eine Draufsicht auf einen als Ausbruch dargestellte Gehäusewandkomponente 2.1 des Resolvergehäuses 21 mit in den Teilausschnitt 17.1 eingesetztem Grundkörperelement 4.

Das Grundkörperelement 4 liegt mit dem verjüngt ausgebildeten Übergangsabschnitt 11 innerhalb des Teilausschnitts 17.1 und an der Gehäusewand 2 der Gehäusewandkomponente 2.1 formschlüssig an. Zusätzlich umgreift das Grundkörperelement 4 die Gehäusewand 2 auf der Gehäuseinnenseite I und auf der Gehäuseaußenseite O mit dem ersten und zweiten Abgangsabschnitt 9, 10 wenigstens formschlüssig.

Die Gehäusewandkomponente 2.1 kann im Bereich des Teilausschnitts 17.1 eine zum Teilausschnitt 17.1 in radialer Richtung R weiter innen angeordnete Ausbuchtung 16 aufweisen, welche in die Einbuchtung 15 des Grundkörperelements 4 eingreift. Hierdurch kann erreicht werden, dass die Vorrichtung 1 besonders stabil im Teilausschnitt 17.1 gehalten wird.

Alternativ zu der in den Figs. 2 bis 4 dargestellten Ausführungsvariante des Grundkörpers 4 und der Gehäusewandkomponente 2.1 kann das Grundkörperelement 4, 5, 6 statt einer Einbuchtung 15 eine Ausbuchtung aufweisen, welche in eine Einbuchtung der Gehäusewandkomponente 2.1 eingreift.

Jeweils eine Litze 3 wird in die Durchtrittsbereiche 7, 8 des Grundkörperelements 4 eingefügt. Anschließend wird das Grundkörperelement 4 mit den eingesetzten Litzen 3 in den Ausschnitt 17 der Gehäusewand 2 formschlüssig eingesetzt.

Die Durchtrittsbereiche 7, 8 besitzen zumindest bei eingesetztem Grundkörperelement 4 in den Ausschnitt 17 einen ersten Durchmesser D1, welcher geringfügig kleiner ist als der Durchmesser D2 einer unbeanspruchten Litze 3. Durch das Einfügen einer Litze 3 in den Durchtrittsbereich 7, 8 kommt es zu einem geringfügigen Aufweiten des Außendurchmessers des Übergangsabschnitts 11, da sich der Grundkörper 4 in diesem Bereich elastisch verformt. Dadurch kann zusätzlich ein Kraftschluss zwischen dem Grundkörperelement 4 und der Gehäusewand 2 ausgebildet werden, wodurch das Grundkörperelement 2 noch sicherer im Ausschnitt 17 gehalten werden kann.

Das Grundkörperelement 4 kann gemäß einer ersten alternativen Ausführungsform derart abgewandelt werden, dass der Außendurchmesser des Übergangsabschnitts 11 ohne eingefügte Litzen 3 in den Durchtrittsbereichen 7, 8 zunächst kleiner ist als die Längsseiten des Ausschnitts 17, d. h., dass höchstens ein Formschluss zwischen Gehäusewand 2 und Grundkörperelement 4 mit einem geringen Spiel vorliegt. Durch das Einfügen der Litzen 3 in die Durchtrittsbereiche 7, 8 wird dann, wie bereits zuvor beschrieben, der Außendurchmesser des Übergangsabschnitts 11 derart geweitet, dass ein Formschluss ohne Spiel sowie ein Kraftschluss zwischen Gehäusewand 2 und Grundkörperelement 4 ausgebildet wird.

Gemäß einer zweiten alternativen Ausführungsform kann das Grundkörperelement 4 bereits einen geringfügig größeren Außendurchmesser des Übergangsabschnitts 11 ohne eingefügte Litzen 3 aufweisen, bevor es in den Ausschnitt 17 der Gehäusewand 2 eingesetzt wird. Zusätzlich können die Durchtrittsbereiche 7, 8 zunächst einen vergrößerten Durchmesser D1 aufweisen, insbesondere größer als ein Durchmesser D2 der unbeanspruchten Litzen. Durch ein Einfügen des Grundkörperelements 4 in den Ausschnitt 17 der Gehäusewand 2 kommt es dann zu einer ersten elastischen Verformung im Bereich des Übergangsabschnitts 11, wodurch der Außendurchmesser des Übergangsabschnitts 11 dem Durchmesser des Ausschnitts 17 der Gehäusewand 2 angeglichen wird. Zusätzlich kommt es zu einer Komprimierung der Durchtrittsbereiche 7, 8, welche dann einen verkleinerten Durchmesser D1 aufweisen, insbesondere einen kleineren Durchmesser als den Durchmesser D2. Anschließend werden die Litzen 3 in die Durchführungsbereiche 7, 8 eingefügt, welche dann form- und kraftschlüssig in den Durchtrittsbereichen gehalten werden.

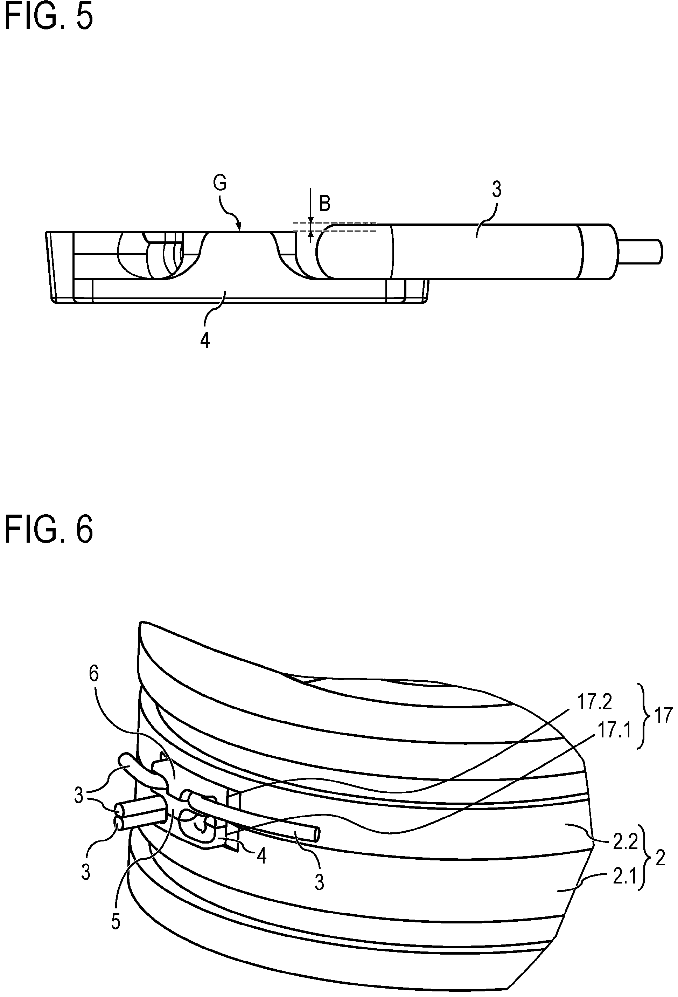

Wie Fig. 5 entnommen werden kann, weisen die Litzen 3 einen Litzenüberstand B über die Grundfläche G hinaus auf, wenn sie in den Durchtrittsbereichen 7, 8 des Grundkörperelements 4 eingefügt sind. Der Litzenüberstand B sorgt bei der später vollständig verbauten Vorrichtung 1 für eine axiale Klemmkraft, worauf in den Ausführungen zu Fig. 6 noch eingegangen wird.

Die erfindungsgemäße Ausgestaltung der Vorrichtung 1 eignet sich insbesondere für Positionsmesseinrichtungen mit modularem Aufbau, da die Vorrichtung 1 bereits während der Fertigung in Teilmodule der Positionsmesseinrichtung eingebracht werden kann und nicht erst am Ende beim sonst vollständig zusammengebauten Positionsmessgerät.

Fig. 6 zeigt ein solches modular aufgebautes Positionsmesseinrichtung in Form einer Winkelmesseinrichtung, genauer gesagt eines Resolvers 20. Der modulare Resolver 20 umfasst ein Resolvergehäuse 21 mit einer Vorrichtung 1 zur definierten Gehäusewand-Durchführung von Litzen 3, welche zusätzlich für eine Zugentlastung der Litzen 3 sorgt. Die Vorrichtung 1 umfasst drei gestapelte Grundkörperelemente 4, 5, 6, welche über Durchtrittsbereiche 7, 8 Litzen 3 aufnehmen können.

Das Resolvergehäuse 21 besteht aus zwei schalenartigen und weitestgehend gleich ausgebildeten und über Planflächen miteinander verbindbaren Gehäusehälften. Jede Gehäusehälfte bildet eine eigene Kavität, ausgehend von den Planflächen, zum Aufnehmen von Bauteilkomponenten des Resolvers 20, insbesondere von gewickelten Spulen mit funktionsspezifischen Anschlusselementen. Jede der Gehäusehälften verfügt über eine weitestgehend axial verlaufende Gehäusewandkomponente 2.1, 2.2 welche über ihre Planflächen aneinander anliegen und gemeinsam die Gehäusewand 2 ausbilden. Die Gehäusewand 2 besitzt einen Ausschnitt 17 mit einem annähernd rechteckigen Querschnitt. Der Ausschnitt 17 wird über Teilausschnitte 17.1, 17.2 auf den Gehäusewandkomponenten 2.1, 2.2 gebildet. Dabei können die Teilausschnitte 17.1, 17.2 identisch ausgebildet sein, z. B. eine identische axiale Schmalseitenlänge aufweisen, oder unterschiedlich ausgebildet sein, z. B. kann einer der Teilausschnitte eine größere axiale Schmalseitenlänge aufweisen als der andere Teilausschnitt.

Während der Fertigung des modular aufgebauten Resolvers 20 können die beiden Gehäusehälften separat mit Bauteilkomponenten bestückt werden. Dies gilt auch für die Vorrichtung 1 zur Durchführung der Litzen 3, welche bereits vor dem zusammenfügen der beiden Gehäusehälften in die Teilausschnitte 17.1, 17.2 eingesetzt werden kann.

Während der Fertigung des Resolvers 20 und bei der Montage der Vorrichtung 1 zur Durchführung von Litzen wird zunächst je eine Litze 3 in die beiden Durchführungsbereiche 7, 8 des ersten Grundkörperelements 4 und über die gesamte Länge der Durchführungsbereiche 7, 8 eingefügt. Dabei kommt es zu einem geringfügigen Aufweiten des Außendurchmessers des Grundkörperelements 4 zumindest im Bereich des Übergangsabschnitts 11. Die teilweise gekrümmt verlaufenen Durchführungsbereiche 7, 8 sorgen für eine Zugentlastung der einzelnen Litzen 3. Die Litzen 3 ragen im vollständig in die Durchführungsbereiche 7, 8 eingesetzten Zustand geringfügig über die Grundfläche G des Grundkörperelements 4 hinaus, so dass ein Litzenüberstand B vorliegt. Anschließend wir das mit den Litzen 3 bestückte erste Grundkörperelement 4 so in den Teilausschnitt 17.1 der Gehäusewandkomponente 2.1 eingesetzt, dass der erste Abgangsabschnitt 9 auf der Gehäuseinnenseite I und der zweite Abgangsabschnitt 10 auf der Gehäuseaußenseite O angeordnet ist. Das Grundkörperelement 4 ist derart in den Teilausschnitt 17.1 eingefügt, dass die Grundfläche G des Grundkörperelements 4 nach oben weist. Der Übergangsabschnitt 11 ist hierbei im Teilausschnitt 17.1 angeordnet, so dass die beiden Abgangsabschnitte 9, 8 die Gehäusewandkomponente 2.1 umgreifen und ein Form- und Kraftschluss zwischen dem ersten Grundkörperelement 4 und der Gehäusewandkomponente 2.1 vorliegt.

Bei der Montage der verbleibenden Bauteile der Vorrichtung 1 an der anderen Gehäusehälfte des Resolvers 20 wird analog zu den zuvor beschriebenen Schritten vorgegangen, d. h. ein zweites und drittes Grundkörperelement 5, 6 mit Litzen 3 werden in den größeren Teilausschnitt 17.2 der Gehäusewandkomponente 2.2 eingefügt, wobei die Grundflächen G des zweiten und dritten Grundkörperelements 5, 6 unmittelbar aneinander anliegen liegen.

Nachdem die Gehäusehälften des Resolvers 20 mit den bestückten Grundkörperelementen 4, 5, 6 vormoniert wurden und die Litzen 3 an die im Gehäuseinneren I befindlichen elektronischen Bauteilkomponenten angesteckt bzw. angelötet wurden, werden die Gehäusehälften abschließend an ihren Planflächen zusammengefügt und fest miteinander verbunden. Dadurch, dass die einzelnen Grundkörperelemente 4, 5, 6 im nun vollständig ausgebildeten Ausschnitt 17 übereinander liegen und die Gehäusehälften miteinander verbunden sind, bildet sich aufgrund des Litzenüberstands B eine Klemmung in axialer Richtung aus. Die Klemmwirkung sorgt dafür, dass die Vorrichtung 1 auch axial gegen ein Verrutschen gesichert ist. Abschließend können die aus den Grundkörperelementen 4, 5, 6 zur Gehäuseaußenseite O hervorragenden Litzen 3 aufgrund der auslaufenden Mündung der Durchtrittsbereiche 7, 8 bedarfsgerecht positioniert werden.

### BEZUGSZEICHENLISTE

- 1: Vorrichtung zur Durchführung von Litzen
- 2: Gehäusewand
- 2.1, 2.2: Gehäusewandkomponente
- 3: Litze
- 4, 5, 6: Grundkörperelement
- 7, 8: Durchtrittsbereich
- 9: erster Abgangsabschnitt
- 10: zweiter Abgangsabschnitt
- 11: Übergangsabschnitt
- 12: erste Austrittsöffnung
- 13: zweite Austrittsöffnung
- 14: dritte Austrittsöffnung
- 15: Einbuchtung
- 16: Ausbuchtung
- 17: Ausschnitt
- 17.1, 17.2: Teilausschnitt

- 20: Resolver
- 21: Resolvergehäuse

- A: Achse
- S: Symmetrieachse
- U: Umfangsrichtung
- R: radiale Richtung
- I: Gehäuseinnenseite
- O: Gehäuseaußenseite
- D1: Durchmesser des Durchführungsbereichs
- D2: Durchmesser der unbeanspruchten Litze
- B: Litzenüberstand
- α: Winkelbereich
- G: Grundfläche

## Patentansprüche

1. Vorrichtung (1) zur Durchführung von Litzen, welche in einen Ausschnitt (17) einer Gehäusewand (2) einer Positionsmesseinrichtung (20) einsetzbar ist, umfassend mindestens ein einstückiges Grundkörperelement (4, 5, 6) mit mindestens einem Durchtrittsbereich (7, 8), durch den eine Litze (3) aus dem Gehäuseinneren (I) zu der Außenseite (O) hindurchführbar ist,
wobei der Durchtrittsbereich (7, 8) als gekrümmte Nut auf einer Grundfläche (G) des Grundkörperelements (4, 5, 6) ausgebildet ist, wobei das Grundkörperelement (4, 5, 6) einen ersten Abgangsabschnitt (9) und einen zweiten Abgangsabschnitt (10) sowie einen dazwischen angeordneten Übergangsabschnitt (11) umfasst,
wobei das Grundkörperelement (4, 5, 6) mit dem Übergangsabschnitt (11) formschlüssig durch den Ausschnitt (17) ragt,
wobei durch ein Einfügen einer Litze (3) in den Durchtrittsbereich (7, 8) die Außenabmessung zumindest des Übergangsabschnitt (11) expandiert, wodurch das Grundkörperelement (4, 5, 6) an die Gehäusewand (2) fixierbar ist.

2. Vorrichtung nach Anspruch 1, wobei der Übergangsabschnitt (11) des Grundkörperelements (4, 5, 6) verjüngt ausgebildet ist und der erste Abgangsabschnitt (9) und der zweite Abgangsabschnitt (10) bei eingesetztem Grundkörperelement (4, 5, 6) die Gehäusewand (2) umgreifen.

3. Vorrichtung nach Anspruch 1 oder 2, wobei der Durchtrittsbereich (7, 8) im Bereich des zweiten Abgangsabschnitts (10) geweitet ausgebildet ist.

4. Vorrichtung nach Anspruch 3, wobei der Durchtrittsbereich (7, 8) innerhalb des zweiten Abgangsabschnitts (10) derart geweitet ist, dass ein aus dem Grundkörperelement (4, 5, 6) austretender Teil einer Litze (3) in einem Winkelbereich (α) von 10 bis 180 Grad bedarfsgerecht positionierbar ist.

5. Vorrichtung nach einem der vorhergehenden Ansprüche, wobei der Durchtrittsbereich (7, 8) innerhalb des ersten Abgangsabschnitts (9) teilweise entlang einer Umfangsrichtung (U) der Gehäusewand (2) verläuft, mit einer ersten Austrittsöffnung (12), welche senkrecht zum Ausschnitt (17) der Gehäusewand (2) verläuft.

6. Vorrichtung nach einem der vorhergehenden Ansprüche, wobei das Grundkörperelement (4, 5, 6) im Bereich des ersten Abgangsabschnitts (9) eine Einbuchtung (15) oder Ausbuchtung aufweist, welche an eine Ausbuchtung (16) bzw. Einbuchtung der Gehäusewand (2) anliegt.

7. Vorrichtung nach einem der vorhergehenden Ansprüche, wobei das Grundkörperelement (4, 5, 6) symmetrisch zu einer Symmetrieachse (S) ausgebildet ist.

8. Vorrichtung nach einem der vorhergehenden Ansprüche, wobei das Grundkörperelement (4, 5, 6) aus einem Thermoplast, Duroplast oder Elastomer vorzugsweise als Spritzgussteil oder Additivteil hergestellt ist.

9. Vorrichtung nach einem der vorhergehenden Ansprüche, wobei die Vorrichtung (1) zwei oder mehr Grundkörperelemente (4, 5, 6) umfasst, welche gestapelt im Ausschnitt (17) der Gehäusewand (2) angeordnet sind.

10. Vorrichtung nach Anspruch 9, wobei die gestapelten Grundkörperelemente (4, 5, 6) identisch ausgebildet sind, wobei die Grundflächen (G) umfassend die Durchtrittsbereiche (7, 8) der außen liegenden Grundkörperelemente (4, 5, 6), in Richtung der Stapelmitte weisen.

11. Winkelmesseinrichtung (20), insbesondere Resolver, mit einer Vorrichtung (1) zur Durchführung von Litzen nach einem der vorhergehenden Ansprüche.

12. Winkelmesseinrichtung nach Anspruch 11, wobei die Gehäusewand (2) mindestens eine erste und zweite Gehäusewandkomponente (2.1, 2.2) umfasst, welche in einer axialen Richtung zu einer gemeinsamen Achse (A) zusammenfügbar sind, wobei die Gehäusewandkomponenten (2.1, 2.2) jeweils einen Teilausschnitt (17.1, 17.2) aufweisen, welche gemeinsamen den Ausschnitt (17) ausbilden, wobei der Ausschnitt (17) die Vorrichtung (1) zur Durchführung von Litzen aufweist, wobei jede Gehäusewandkomponente (2.1, 2.2) im jeweiligen Teilausschnitt (5.1, 5.2) mindestens ein Grundkörperelement (4, 5, 6) umfasst.
